# EUROPÄISCHE PATENTSCHRIFT

(11) **EP 3 337 993 B1**
(45) Veröffentlichungstag und Bekanntmachung des Hinweises auf die Patenterteilung: **26.10.2022**
(21) Anmeldenummer: 16778194.7
(22) Anmeldetag: 10.08.2016
(51) Int. Cl.: F16C 33/64, B23Q 7/14, B23Q 11/00, B24B 5/04, B24B 5/08, B24B 5/12, B24B 5/35, B24B 19/06, B24B 27/00, B24B 33/02, B24B 33/04, B24B 41/00, B24B 49/00, B24B 55/06, B65G 37/00

(54) **VERFAHREN ZUR HERSTELLUNG VON LAGERKOMPONENTEN MITTELS EINER FERTIGUNGSSTRASSE, FERTIGUNGSSTRASSE UND FERTIGUNGSANLAGE**
METHOD FOR PRODUCING BEARING COMPONENTS BY MEANS OF A PRODUCTION LINE, PRODUCTION LINE AND PRODUCTION SYSTEM
PROCÉDÉ DE FABRICATION DE COMPOSANTS DE PALIER AU MOYEN D'UNE CHAÎNE DE PRODUCTION, CHAÎNE DE PRODUCTION ET INSTALLATION DE PRODUCTION

(30) Priorität: 17.08.2015 DE 102015215624
(43) Veröffentlichungstag der Anmeldung: 27.06.2018
(73) Patentinhaber: Schaeffler Technologies AG & Co. KG, 91074 Herzogenaurach (DE)
(72) Erfinder: SCHNABEL, Wolfgang, 91086 Aurachtal (DE); STERZINGER, Benno, 97618 Rödelmaier (DE); SCHOLTZ, Detlef, 97437 Hassfurt (DE); LUTZ, Martin, 97531 Untertheres (DE); SCHMITT, Thomas, 96528 Schalkau (DE); KUCKUK, André, 91074 Herzogenaurach (DE); HEUER, Werner, 56179 Vallendar (DE); PICHL, Klaus, 91074 Herzogenaurach (DE); SEUBOLD, Daniel, 96257 Marktgraitz (DE)
(86) Internationale Anmeldenummer: PCT/DE2016/200365
(87) Internationale Veröffentlichungsnummer: WO 2017/028855

(56) Entgegenhaltungen:
- EP-A1- 1 801 577
- EP-A2- 0 768 145
- DE-A1- 2 544 666
- DE-U1-202012 008 938
- FR-A1- 2 568 861
- US-A- 2 912 795
- US-A- 3 881 886
- US-A1- 2006 089 087
- US-A1- 2006 226 584

## Beschreibung

Die Erfindung betrifft ein Verfahren zur Herstellung von Lagerkomponenten mittels einer Fertigungsstraße, welche mindestens eine Schleifmaschine, mindestens eine Honmaschine, mindestens eine Reinigungseinheit und mindestens eine Transporteinheit umfasst, wobei jede Lagerkomponente mittels der mindestens einen Transporteinheit durch die Fertigungsstraße transportiert wird, wobei mindestens eine Schleifbearbeitung jeder Lagerkomponente mittels der mindestens einen Schleifmaschine, mindestens ein Honen jeder Lagerkomponente mittels der mindestens einen Honmaschine und mindestens ein Reinigen jeder Lagerkomponente in der mindestens einen Reinigungseinheit erfolgt. Die Erfindung betrifft weiterhin eine Fertigungsstraße zur Herstellung von Lagerkomponenten, welche mindestens eine Schleifmaschine, mindestens eine Honmaschine, mindestens eine Reinigungseinheit und mindestens eine Transporteinheit umfasst, wobei die Lagerkomponenten mittels der mindestens einen Transporteinheit durch die Fertigungsstraße transportierbar und dabei der mindestens einen Schleifmaschine, der mindestens einen Honmaschine und der mindestens einen Reinigungseinheit zuführbar sind. Weiterhin betrifft die Erfindung eine Fertigungsanlage umfassend zwei derartige Fertigungsstraßen.

Die DE 25 44 666 A1 beschreibt eine Schleifmaschine für die Feinstbearbeitung kugelförmiger Innenflächen, insbesondere eines Anlaufbordes von Axial-Pendelrollenlagern. Dabei sind mehrere Stationen zur Bearbeitung unterschiedlicher Flächen des Werkstücks vorgesehen.

Die US 2 912 795 A beschreibt eine Vorrichtung zur Durchführung einer Abfolge von aufeinanderfolgenden Arbeitsschritten an einem Werkstück in einer automatisierten Fertigungsstraße, wobei sich die Werkstücke gegenseitig nicht berühren.

Die US 2006 / 089 087 A1 offenbart eine Honvorrichtung zum Honen von Werkstücken umfassend mehrere Arbeitsstationen. Es ist weiterhin ein Fördersystem vorhanden, um die Werkstücke auf einer Stapelplatte zu einer Arbeitsstation hin und von dieser weg zu transportieren. Ein Greifersystem und ein Dreh-Hubsystem dienen zur Übergabe der Werkstücke mit Stapelplatte zwischen einem Rollenförderer und der jeweiligen Arbeitsstation. Zudem können Apparaturen zum Messen und Entgraten vorgesehen sein.

Verfahren und Fertigungsstraßen der oben genannten Art sind bereits bekannt, beispielsweise bei der Herstellung von Lagerkomponenten in Form von Lagerringen. Die einzelnen Stationen innerhalb der Fertigungsstraße, wie eine Schleifmaschine, eine Honmaschine, eine Reinigungseinheit, usw. werden dabei nachfolgend vereinfacht als Fertigungseinheit bezeichnet. Dabei werden die Lagerkomponenten in einer Fertigungseinheit behandelt und zur nächsten Fertigungseinheit übergeben, wobei eine Transporteinheit beispielsweise für eine Zuführung einer Lagerkomponente zu einer Fertigungseinheit und eine Übergabe der Lagerkomponente an die Fertigungseinheit und/oder für eine Übernahme der Lagerkomponente aus einer Fertigungseinheit, einen Transport der Lagerkomponente und eine Übergabe der Lagerkomponente an eine in der Fertigungsstraße nachfolgende Fertigungseinheit zuständig ist. Weiterhin kann auch ein Transport der Lagerkomponente durch eine Fertigungseinheit mittels der mindestens einen Transporteinheit erfolgen. Somit kann eine Transporteinheit ein Bestandteil einer Fertigungseinheit sein oder als separate Einheit ausgebildet sein. Dabei werden in der Regel Fertigungseinheiten in einer Fertigungsstraße miteinander verknüpft, die unterschiedlichster Bauart sind und unterschiedlichste Aufgaben zu erfüllen haben. Dies führt dazu, dass Fertigungseinheiten mit unterschiedlichsten Dimensionen, Zuführ- und Abführebenen für die Lagerkomponente und weiterhin unterschiedlichsten Durchlaufzeiten für die Lagerkomponente in Reihe geschaltet werden müssen. Die daraus resultierenden Probleme beim Aufbau einer Fertigungsstraße werden in der Regel dadurch beseitigt, dass die mindestens eine Transporteinheit unter anderem dazu eingerichtet und eingesetzt wird, Höhenunterschiede zwischen aufeinander folgenden, miteinander verketteten Fertigungseinheiten zu überbrücken, die Lagerkomponente in die für die nachfolgende Fertigungseinheit benötigte Position zu bringen, beispielsweise durch Umwenden, Drehen, Kippen, usw., und einen Zwischenspeicher für nicht sofort weiterverarbeitbare Lagerkomponenten bereitzustellen. Dieses Hantieren mit den Lagerkomponenten innerhalb einer Fertigungsstraße ist aufwendig und führt weiterhin dazu, dass die Lagerkomponenten einem ständigen mechanischen Eingriff unterliegen. So wird eine Lagerkomponente beispielsweise mittels Greifern gepackt, über Rampen abgerollt oder über Rutschen geleitet, in Hubeinrichtungen nach oben transportiert und dergleichen, wobei die Lagerkomponenten auch miteinander in Kontakt kommen bzw. gegeneinander schlagen.

Es hat sich gezeigt, dass eine derartige Vorgehensweise zu Beeinflussungen im Bereich der Oberflächengüte und Maßhaltigkeit bzw. der erzielbaren Toleranzen der Lagerkomponenten führt.

Es ist daher Aufgabe der Erfindung, ein dahingehend verbessertes Verfahren zur Herstellung von Lagerkomponenten mittels einer Fertigungsstraße bereitzustellen. Es ist weiterhin Aufgabe der Erfindung, eine Fertigungsstraße bzw. eine Fertigungsanlage zur Herstellung von hochmaßhaltigen Lagerkomponenten bereitzustellen.

Die Aufgabe wird für das Verfahren zur Herstellung von Lagerkomponenten mittels einer Fertigungsstraße, welche mindestens eine Schleifmaschine, mindestens eine Honmaschine, mindestens eine Reinigungseinheit und mindestens eine Transporteinheit umfasst, wobei jede Lagerkomponente mittels der mindestens einen Transporteinheit durch die Fertigungsstraße transportiert wird, wobei mindestens eine Schleifbearbeitung jeder Lagerkomponente mittels der mindestens einen Schleifmaschine, mindestens ein Honen jeder Lagerkomponente mittels der mindestens einen Honmaschine und mindestens ein Reinigen jeder Lagerkomponente in der mindestens einen Reinigungseinheit erfolgt, dadurch gelöst, dass als mindestens eine Schleifmaschine eine Vertikalschleifmaschine eingesetzt wird, wobei die Lagerkomponente als ein Lagerring ausgebildet wird und die Schleifbearbeitung einen Schritt des Innenschleifens des Lagerrings mittels einer ersten Vertikalschleifmaschine umfasst, und dass jede Lagerkomponente die Fertigungsstraße liegend auf einer gleichbleibenden horizontalen Ebene durchläuft, wobei eine Höhenlagenverschiebung eines Schwerpunkts einer Lagerkomponente um bis zu ± 10 cm noch als ein Transport in einer gleichbleibenden horizontalen Ebene angesehen wird.

Die Aufgabe wird für die Fertigungsstraße zur Herstellung von Lagerkomponenten in Form von Lagerringen, welche mindestens eine Schleifmaschine, mindestens eine Honmaschine, mindestens eine Reinigungseinheit und mindestens eine Transporteinheit umfasst, wobei die Lagerkomponenten mittels der mindestens einen Transporteinheit durch die Fertigungsstraße transportierbar und dabei der mindestens einen Schleifmaschine, der mindestens einen Honmaschine und der mindestens einen Reinigungseinheit zuführbar sind, dadurch gelöst, dass die mindestens eine Schleifmaschine eine Vertikalschleifmaschine ist und dass die Fertigungsstraße derart ausgebildet ist, dass die Lagerkomponenten diese auf einer gleichbleibenden horizontalen Ebene durchlaufen, wobei eine Höhenlagenverschiebung eines Schwerpunkts einer Lagerkomponente um bis zu ± 10 cm noch als ein Transport in einer gleichbleibenden horizontalen Ebene anzusehen ist.

Es hat sich gezeigt, dass eine signifikante Verbesserung der Maßhaltigkeit einer Lagerkomponente erreicht werden kann, wenn die Anzahl an mechanischen Eingriffen, die auf die Lagerkomponente einwirken, vermindert wird. Dabei hat es sich insbesondere gezeigt, dass es besonders effektiv hinsichtlich der angestrebten Maßhaltigkeit und der gewünschten geringen Toleranzen ist, die Lagerkomponente auf einer gleichbleibenden horizontalen Ebene durch die Fertigungsstraße zu transportieren. Dabei wird eine Höhenlagenverschiebung eines Schwerpunkts einer Lagerkomponente um bis zu ± 10 cm, insbesondere bis zu ± 5 cm, noch als ein Transport in einer gleichbleibenden horizontalen Ebene angesehen. Dazu müssen allerdings Fertigungseinheiten eingesetzt werden, die eine derartige Vorgehensweise auch ermöglichen. Dabei hat es sich als erforderlich herausgestellt, dass die mindestens eine Schleifmaschine durch eine Vertikalschleifmaschine bereitgestellt wird. Eine derartige Vertikalschleifmaschine lässt sich in eine Fertigungsstraße integrieren, bei der die Lagerkomponente auf einer gleichbleibenden horizontalen Ebene durch die Fertigungsstraße läuft. Auch eine Reduzierung von Kontakten zwischen Lagerkomponenten ist erreichbar und wirkt sich positiv auf die Maßhaltigkeit und Toleranzen einer Lagerkomponente aus. Bei dem Transport der Lagerkomponenten auf gleichbleibender horizontalen Ebene durch die Fertigungsstraße kann auf Greifer, Rampen und Rutschen weitgehend verzichtet werden.

Wälzlager, die mit Lagerkomponenten wie Lagerringen, Wälzkörpern, Wälzlagerkäfigen usw. nach dem erfindungsgemäßen Verfahren gefertigt werden, weisen geringe Lagertoleranzen, eine hohe Maßhaltigkeit und eine besonders hohe Laufruhe auf.

Dabei wird als Lagerkomponente ein Lagerring, insbesondere ein Lageraußenring oder ein Lagerinnenring, ausgebildet, wobei die Schleifbearbeitung einen Schritt des Innenschleifens des Lagerrings mittels einer ersten Vertikalschleifmaschine umfasst. Sofern der Lagerring als Lagerinnenring ausgebildet wird, umfasst die Schleifbearbeitung weiterhin bevorzugt einen Schritt des Außenschleifens des Lagerinnenrings mittels einer weiteren Vertikalschleifmaschine. Dabei ist im Fertigungsablauf insbesondere sowohl eine Bearbeitungsreihenfolge am Lagerinnenring möglich, bei der zuerst eine Bearbeitung durch Außenschleifen (entsprechend einem Schleifen der Laufbahn des Lagerinnenrings) und anschließend eine Bearbeitung durch Innenschleifen (entsprechend einen Schleifen einer Bohrung des Lagerinnenrings) erfolgt als auch eine Bearbeitungsreihenfolge, bei der zuerst eine Bearbeitung durch Innenschleifen und anschließend eine Bearbeitung durch Außenschleifen erfolgt. Insofern ist eine Reihefolge einer ersten und von weiteren Vertikalschleifmaschinen innerhalb einer Fertigungsstraße beliebig wählbar.

Die mindestens eine Honmaschine ist in einer bevorzugten Ausgestaltung des Verfahrens bzw. der Fertigungsstraße als eine Vertikalhonmaschine ausgebildet. Eine solche Vertikalhonmaschine lässt sich ideal in eine Fertigungsstraße umfassend Vertikalschleifmaschinen integrieren und ermöglicht ebenfalls einen Transport der Lagerkomponente auf einer gleichbleibenden horizontalen Ebene durch die Fertigungsstraße. Die Verknüpfung zwischen einer Vertikalschleifmaschine und einer Vertikalhonmaschine wird bevorzugt über eine Transporteinheit in Form eines Förderbands ausgebildet. Alternativ können eine in die Honmaschine integrierte Transporteinheit und eine in die Vertikalschleifmaschien integrierte weitere Transporteinheit eingesetzt werden, um eine Verknüpfung dieser Fertigungseinheiten auszubilden.

Bevorzugt wird die in dem Verfahren eingesetzte Fertigungsstraße weiterhin umfassend mindestens eine Demagnetisierungseinheit ausgebildet, wobei die Lagerkomponente nach der Schleifbearbeitung und/oder dem Honen demagnetisiert wird. Die Fertigungsstraße umfasst demnach vorzugsweise weiterhin mindestens eine Demagnetisierungseinheit zum Demagnetisieren der Lagerkomponenten. Der Demagnetisierungsschritt ermöglicht ein gründliches Reinigen der bearbeiteten Lagerkomponente von anhaftenden Metallpartikeln oder Metallspänen.

Die Lagerkomponente wird vorzugsweise nach dem Honen und/oder nach dem Demagnetisieren in der mindestens einen Reinigungseinheit gereinigt. Dies dient zur Säuberung der Lagerkomponenten, wobei eine Entfernung von anhaftenden Metallpartikeln oder Metallspänen, Schmieröl, Schneidflüssigkeiten, Schmutz und dergleichen erfolgt. Dabei umfasst eine Reinigungseinheit vorzugsweise eine Wascheinheit und/oder eine Gasstrahlreinigungsanlage.

Die in dem Verfahren eingesetzte Fertigungsstraße wird insbesondere umfassend mindestens eine Messeinheit ausgebildet, wobei die Lagerkomponente vor der Schleifbearbeitung und/oder nach der Schleifbearbeitung und/oder nach dem Honen vermessen wird. Die Fertigungsstraße umfasst demnach vorzugsweise weiterhin mindestens eine Messeinheit zur Vermessung der Lagerkomponenten. Eine derartige Messeinheit, insbesondere nach einer Vertikalschleifmaschine angeordnet, ermöglicht einen Regeleingriff auf die Parameter nachfolgender Fertigungseinheiten und die Erreichung besonders hoher Maßhaltigkeit.

Eine Reihenfolge der innerhalb einer Fertigungsstraße eingesetzten Fertigungseinheiten ist nicht vorgegeben, sondern nach Bedarf wählbar. So können unter anderem folgende, hier nur beispielhaft genannte Abfolgen von Fertigungseinheiten vorhanden sein:
a) Erste Vertikalschleifmaschine - mindestens eine weitere Vertikalschleifmaschine - Vertikalhonmaschine - Messeinheit - Demagnetisierungseinheit - Reinigungseinheit
b) Erste Vertikalschleifmaschine - mindestens eine weitere Vertikalschleifmaschine - Messeinheit - Vertikalhonmaschine - Messeinheit - weitere Vertikalhonmaschine - Demagnetisierungseinheit - Reinigungseinheit
c) Reinigungseinheit - Vertikalschleifmaschine - Vertikalhonmaschine - Reinigungseinheit - Messeinheit - Demagnetisierungseinheit - Reinigungseinheit

Viele weitere sinnvolle Abfolgen sind unter Einsatz der genannten Fertigungseinheiten möglich, wobei eine Übergabe zwischen den Fertigungseinheiten über eine oder mehrere - separate und/oder in Fertigungseinheiten integrierte - Transporteinheiten erfolgen kann.

Die Lagerkomponenten in Form von Lagerringen werden bevorzugt mit Durchmessern im Bereich von 10 bis 500 mm, insbesondere im Bereich von 15 bis 460 mm, hergestellt.

In das erfindungsgemäße Verfahren und die erfindungsgemäße Fertigungsstraße können weitere Fertigungseinheiten eingebunden sein, wie vorzugsweise mindestens eine der nachfolgenden Einheiten: eine Fräsmaschine, eine Drehmaschine, eine Läppmaschine, eine Bohrmaschine, eine Stanzeinheit, eine Presseneinheit, eine Wärmebehandlungseinheit, eine Trocknungseinheit, eine automatische Zuführeinheit und/oder mindestens eine automatische Verpackungseinheit, eine automatische Mess - und Regelungseinheit.

Es hat sich eine Fertigungsanlage bewährt, die mindestens zwei erfindungsgemäße Fertigungsstraßen sowie mindestens eine Bediengasse umfasst, wobei beiderseits einer jeden Bediengasse je eine Fertigungsstraße angeordnet ist, deren Bedien- und Anzeigeeinheiten zueinander zeigend angeordnet sind.

Sofern die Fertigungsanlage eine erste Fertigungsstraße zur Fertigung eines Lagerinnenrings und eine zweite Fertigungsstraße zur Fertigung eines Lageraußenrings umfasst, kann am Ende jeder Fertigungsstraße eine unmittelbare Zusammenführung jeweils eines Lagerinnenrings und eines Lageraußenrings mit nachfolgender Montage eines kompletten Wälz- oder Gleitlagers erfolgen.

Insbesondere durchlaufen die Lagerkomponenten beide Fertigungsstraßen der Fertigungsanlage auf der gleichen horizontalen Ebene E. Dies vereinfacht eine derartige Zusammenführung von fertig bearbeiteten Lagerkomponenten aus unterschiedlichen Fertigungsstraßen.

Innerhalb einer Fertigungsanlage hat es sich bewährt, wenn jede Bediengasse eine Breite im Bereich von 0,75 bis 1,5 m aufweist.

Insbesondere ist es von Vorteil, wenn die Fertigungsanlage weiterhin mindestens eine Montagestation umfasst, die nachfolgend zu den mindestens zwei Fertigungsstraßen mit diesen verkettet ist und zur Endmontage eines Wälz- oder Gleitlagers umfassend die aus den Fertigungsstraßen stammenden Lagerkomponenten eingerichtet ist. Es entfällt eine Zwischenspeicherung der gefertigten Lagerkomponenten und damit auch die Gefahr, dass die Maßhaltigkeit der gefertigten Lagerkomponenten beispielsweise durch erforderliche mechanische Eingriffe beim Zwischenlagern oder Zwischenspeichern, z.B. durch ein gegenseitiges in Kontakt kommen der fertigen Lagerkomponenten, wieder beeinträchtigt wird.

Die Figuren 1 bis 6 sollen ein erfindungsgemäßes Verfahren und eine erfindungsgemäße Fertigungsstraße sowie eine Fertigungsanlage beispielhaft erläutern. So zeigt:
- FIG 1: eine Fertigungsstraße in der Vorderansicht;
- FIG 2: einen schematischen Ausschnitt aus einer Vertikalschleifmaschine;
- FIG 3: eine Bearbeitung einer Lagerkomponente in einer Schleifeinrichtung einer Vertikalschleifmaschine;
- FIG 4: eine Fertigungseinheit mit Transporteinheit;
- FIG 5: eine weitere Fertigungsstraße umfassend drei verkettete Fertigungseinheiten gemäß FIG 4;
- FIG 6: eine Fertigungsanlage mit zwei Fertigungsstraßen.

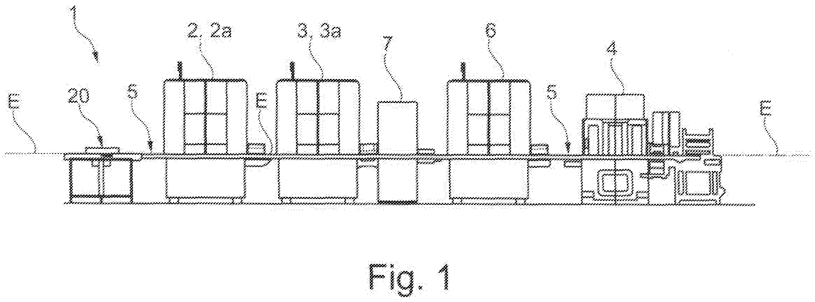

FIG 1 zeigt eine Fertigungsstraße 1 in der Vorderansicht zur Herstellung von Lagerkomponenten, insbesondere von Lagerringen 20, welche eine Schleifmaschine 2, eine Honmaschine 3, eine Reinigungseinheit 4 und Transporteinheiten 5 umfasst. Weiterhin sind zwischen der Honmaschine 3 und der Reinigungseinheit 4 eine Messeinheit 7 und eine Demagnetisierungseinheit 6 vorhanden. Die Lagerkomponenten werden mittels der Transporteinheiten 5 durch die Fertigungsstraße 1 transportiert und dabei nacheinander der Schleifmaschine 2, der Honmaschine 3, der Messeinheit 7, der Demagnetisierungseinheit 6 und der Reinigungseinheit 4 zugeführt. Die Schleifmaschine 2 ist dabei als eine Vertikalschleifmaschine 2a ausgebildet. Die Honmaschine 3 ist dabei als eine Vertikalhonmaschine 3a ausgebildet. Die Fertigungsstraße 1 ist weiterhin derart ausgebildet, dass die Lagerkomponenten diese liegend auf einer gleichbleibenden horizontalen Ebene E durchlaufen. Die Transporteinheiten 5 sind als Förderbänder ausgestaltet, schließen unmittelbar aneinander an und sind zum Transport der zu bearbeitenden Lagerkomponenten in der horizontalen Ebene E durch die Fertigungsstraße 1 eingerichtet. Dabei können in der Fertigungsstraße 1 in die Fertigungseinheiten integrierte Transporteinheiten 5 und/oder separate Transporteinheiten 5 zum Einsatz kommen.

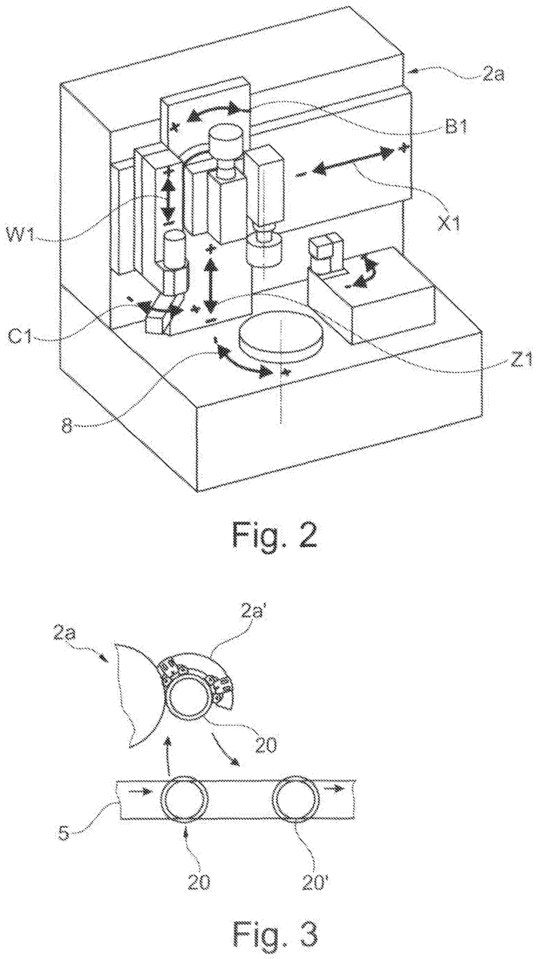

Gleiche Bezugszeichen kennzeichnen in den nachfolgend beschriebenen Figuren 2 bis 6 gleiche Elemente.

FIG 2 zeigt beispielhaft einen schematischen Ausschnitt aus einer Vertikalschleifmaschine 2a mit Werkzeugachsen B1, C1, W1, X1, Z1, einer Werkzeugspindel 8 und zwei Schleifspindeln zur flexiblen Schleifbearbeitung von Lagerkomponenten.

FIG 3 zeigt in der Draufsicht eine Bearbeitung einer Lagerkomponente in Form eines Lagerrings 20 in einer Vertikalschleifmaschine 2a mittels einer Schleifeinrichtung 2a'. Der Lagerring 20 wird auf einer Transporteinheit 5 liegend in Pfeilrichtung transportiert und über einen nicht dargestellten Schieber der Schleifeinrichtung 2a' liegend zugeführt und mittels dieser in liegender Position geschliffen. Nach Beendigung des Schleifvorgangs wird der geschliffene Lagerring 20' liegend an die Transporteinheit 5 übergeben und liegend weitertransportiert. Ein Drehen oder Kippen des Lagerrings 20, 20' im Zuge der Schleifbearbeitung erfolgt nicht.

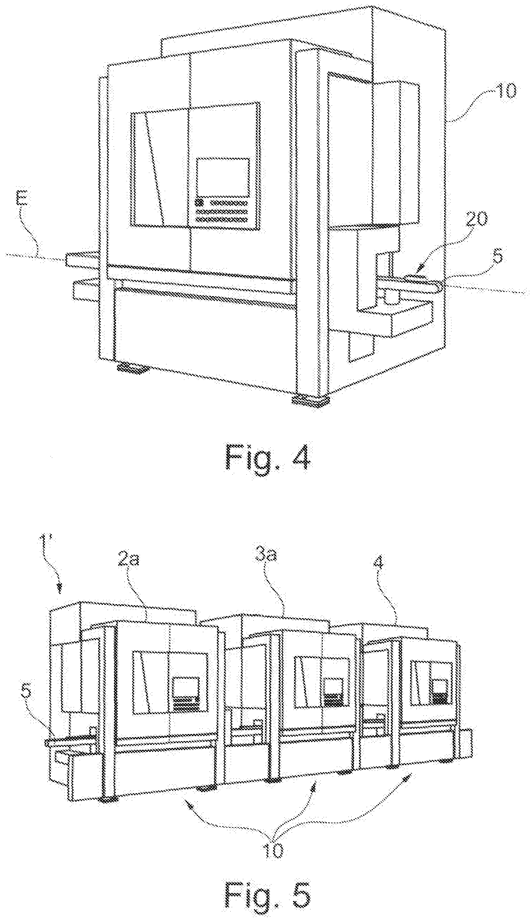

FIG 4 zeigt eine bevorzugte Fertigungseinheit 10 für eine Fertigungsstraße 1 in dreidimensionaler Ansicht. Eine solche Fertigungseinheit 10 kann eine Schleifmaschine 2, eine Honmaschine 3, eine Reinigungseinheit 4, eine Messeinheit 7 oder eine Demagnetisierungeeinheit 6 darstellen. Die Fertigungseinheit 10 umfasst eine integrierte Transporteinheit 5 in Form eines Förderbands, auf welchem eine Lagerkomponente, hier ein Lagerring 20, liegend auf einer horizontalen Ebene E durch die Fertigungseinheit 10 transportiert werden kann.

FIG 5 zeigt eine weitere Fertigungsstraße 1' umfassend drei verkettete Fertigungseinheiten 10 gemäß FIG 4 in Form einer Vertikalschleifmaschine 2a, einer Vertikalhonmaschine 3a und einer Reinigungseinheit 4. Die weitere Fertigungsstraße 1' umfasst eine Transporteinheit 5 in Form eines Förderbands, auf welchem eine Lagerkomponente liegend auf einer horizontalen Ebene E durch die Fertigungsstraße 1' transportiert werden kann.

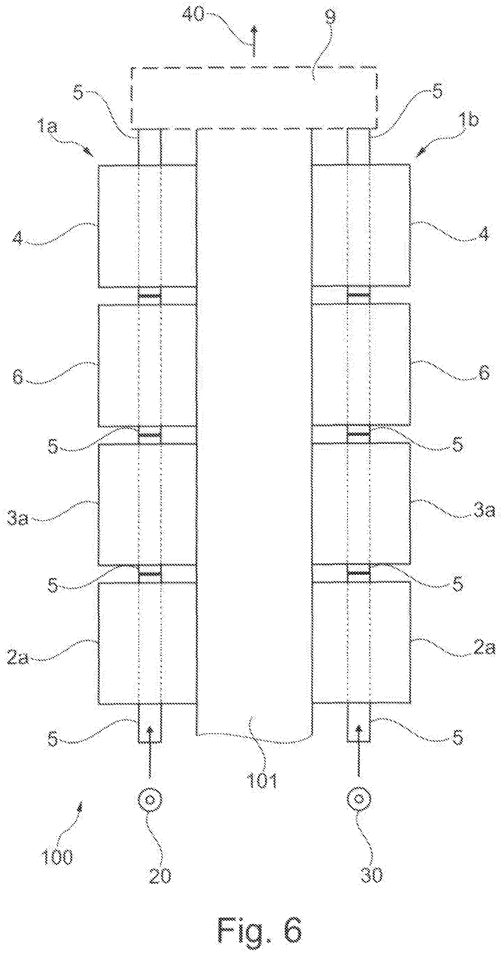

FIG 6 zeigt eine schematische Darstellung einer Fertigungsanlage 100 umfassend zwei Fertigungsstraßen 1a, 1b in der Draufsicht. Die beiden Fertigungsstraßen 1a, 1b sind rechts und links entlang einer Bediengasse 101 angeordnet. Dabei sind Bedien- und Anzeigeeinheiten der beiden Fertigungsstraßen 1a, 1b zueinander zeigend angeordnet. Eine sich in der Bediengasse 101 befindende Person kann gleichzeitig beide Fertigungsstraßen 1a, 1b im Blick behalten und gegebenenfalls in deren Steuerung eingreifen. Weiterhin sind hier beispielhaft zu bearbeitende Lagerkomponenten in Form von Lagerringen 20, 30 dargestellt, die in Pfeilrichtung durch die jeweilige Fertigungsstraße 1a, 1b transportiert werden. Dabei sind hier innerhalb jeder Fertigungsstraße 1a, 1b beispielsweise eine Vertikalschleifmaschine 2a, eine Vertikalhonmaschine 3a, eine Demagnetisierungseinheit 6 und eine Reinigungseinheit 4 miteinander verkettet, welchen die Lagerringe 20, 30 mittels der Transporteinheiten 5 nacheinander einer Bearbeitung bzw. Behandlung zugeführt werden.

Es können dabei beliebig viele Fertigungseinheiten miteinander verkettet sein und dabei unterschiedliche und/oder gleiche Fertigungseinheiten in einer einzelnen Fertigungsstraße vorhanden sein. So können auch parallel mehrere Vertikalschleifmaschinen und/oder Vertikalhonmaschinen angeordnet sein, die mit einer einzelnen und gegebenenfalls schneller arbeitenden nachfolgenden Fertigungseinheit verknüpft sind. Auch ist es nicht notwendig, dass beide von der Bediengasse aus bedienbaren Fertigungsstraßen in Transportrichtung der Bauteile gesehen gleich ausgebildet sind bzw. dass gleiche oder ähnliche Lagerkomponenten durch die beiden Fertigungsstraßen bearbeitet werden.

Sofern mehrere Bediengassen vorhanden sind, sind diese vorzugsweise parallel ausgerichtet, wobei beispielsweise zwei Fertigungsanlagen gemäß FIG 6 nebeneinander angeordnet sind.

Dabei würden die, der Bediengasse 101 abgewandten Seiten der Fertigungseinheiten jeweils vorzugsweise an die, der weiteren parallelen Bediengasse abgewandten Seiten von Fertigungseinheiten angrenzen, welche dieser weiteren Bediengasse zugeordnet sind.

Den beiden Fertigungsstraßen 1a, 1b nachgeordnet ist eine Montageeinheit 9 vorhanden, welcher die fertig bearbeiteten Lagerringe 20, 30 zugeführt werden. In der Montageeinheit 9 erfolgt eine Montage der Lagerringe 20, 30 zu einem fertigen Wälz- oder Gleitlager 40. Dabei kann jeweils eine Fertigungsstraße für Lagerkomponenten in Form von Lagerinnenringen, Lageraußenringen, Wälzlagerkäfigen und Wälzkörper vorhanden sein, die alle mit mindestens einer nachfolgenden Montageeinheit 9 verkettet sind, um darin aus den Lagerkomponenten ein fertiges Wälz- oder Gleitlager 40 komplett zu montieren.

### Bezugszeichenliste

- 1, 1', 1a, 1b: Fertigungsstraße
- 2: Schleifmaschine,
- 2a: Vertikalschleifmaschine
- 2a': Schleifeinrichtung Vertikalschleifmaschine
- 3: Honmaschine
- 3a: Vertikalhonmaschine
- 4: Reinigungseinheit
- 5: Transporteinheit
- 6: Demagnetisierungeinheit
- 7: Messeinheit
- 8: Werkzeugspindel
- 9: Montageeinheit
- 10: Fertigungseinheit
- 20, 30: Lagerring
- 20': geschliffener Lagerring
- 40: Wälz- oder Gleitlager
- 100: Fertigungsanlage
- 101: Bediengasse

- B1, C1, X1, W1, Z1: Werkzeugachse
- E: horizontale Ebene

## Patentansprüche

1. Verfahren zur Herstellung von Lagerkomponenten mittels einer Fertigungsstraße (1, 1', 1a, 1b), welche mindestens eine Schleifmaschine (2), mindestens eine Honmaschine (3), mindestens eine Reinigungseinheit (4) und mindestens eine Transporteinheit (5) umfasst, wobei jede Lagerkomponente mittels der mindestens einen Transporteinheit (5) durch die Fertigungsstraße (1) transportiert wird, wobei mindestens eine Schleifbearbeitung jeder Lagerkomponente mittels der mindestens einen Schleifmaschine (2), mindestens ein Honen jeder Lagerkomponente mittels der mindestens einen Honmaschine (3) und mindestens ein Reinigen jeder Lagerkomponente in der mindestens einen Reinigungseinheit (4) erfolgt, wobei als mindestens eine Schleifmaschine (2) eine Vertikalschleifmaschine (2a) eingesetzt wird, wobei die Lagerkomponente als ein Lagerring (20, 30) ausgebildet wird und die Schleifbearbeitung einen Schritt des Innenschleifens des Lagerrings (20, 30) mittels einer ersten Vertikalschleifmaschine (2a) umfasst, und wobei jede Lagerkomponente die Fertigungsstraße (1) liegend auf einer gleichbleibenden horizontalen Ebene (E) durchläuft, wobei eine Höhenlagenverschiebung eines Schwerpunkts einer Lagerkomponente um bis zu ± 10 cm noch als ein Transport in einer gleichbleibenden horizontalen Ebene angesehen wird.

2. Verfahren nach Anspruch 1, **dadurch gekennzeichnet, dass** der Lagerring (20, 30) als ein Lageraußenring oder als ein Lagerinnenring ausgebildet wird.

3. Verfahren nach Anspruch 2, **dadurch gekennzeichnet, dass** der Lagerring (20, 30) als Lagerinnenring ausgebildet wird und dass die Schleifbearbeitung weiterhin einen Schritt des Außenschleifens des Lagerinnenrings mittels einer weiteren Vertikalschleifmaschine (2a) umfasst.

4. Verfahren nach einem der Ansprüche 1 bis 3, **dadurch gekennzeichnet, dass** die mindestens eine Honmaschine (3) als eine Vertikalhonmaschine (3a) ausgebildet ist.

5. Verfahren nach einem der Ansprüche 1 bis 4, **dadurch gekennzeichnet, dass** die Fertigungsstraße (1, 1', 1a, 1b) weiterhin mindestens eine Demagnetisierungseinheit (6) umfassend ausgebildet wird und dass die Lagerkomponente nach der Schleifbearbeitung und/oder dem Honen demagnetisiert wird.

6. Verfahren nach Anspruch 5, **dadurch gekennzeichnet, dass** die Lagerkomponente nach dem Honen und/oder nach dem Demagnetisieren in der mindestens einen Reinigungseinheit (4) gereinigt wird.

7. Verfahren nach einem der Ansprüche 1 bis 6, **dadurch gekennzeichnet, dass** die Fertigungsstraße (1, 1', 1a, 1b) mindestens eine Messeinheit (7) umfassend ausgebildet wird und dass die Lagerkomponente vor der Schleifbearbeitung und/oder nach der Schleifbearbeitung und/oder nach dem Honen vermessen wird.

8. Verfahren nach Anspruch 2 oder Anspruch 2 in Verbindung mit einem der Ansprüche 3 bis 7, **dadurch gekennzeichnet, dass** der Lagerring (20, 30) einen Durchmesser im Bereich von 10 bis 500 mm, insbesondere im Bereich von 15 bis 460 mm, aufweist.

9. Fertigungsstraße (1, 1', 1a, 1b) zur Herstellung von Lagerkomponenten in Form von Lagerringen (20, 30), welche mindestens eine Schleifmaschine (2), mindestens eine Honmaschine (3), mindestens eine Reinigungseinheit (4) und mindestens eine Transporteinheit (5) umfasst, wobei die Lagerkomponenten mittels der mindestens einen Transporteinheit (5) durch die Fertigungsstraße (1, 1', 1a, 1b) transportierbar und dabei der mindestens einen Schleifmaschine (2), der mindestens einen Honmaschine (3) und der mindestens einen Reinigungseinheit (4) zuführbar sind, **dadurch gekennzeichnet,**
**dass** die mindestens eine Schleifmaschine (2) eine Vertikalschleifmaschine (2a) ist und dass die Fertigungsstraße (1, 1', 1a, 1b) derart ausgebildet ist, dass die Lagerkomponenten diese auf einer gleichbleibenden horizontalen Ebene (E) durchlaufen, wobei eine Höhenlagenverschiebung eines Schwerpunkts einer Lagerkomponente um bis zu ± 10 cm noch als ein Transport in einer gleichbleibenden horizontalen Ebene anzusehen ist.

10. Fertigungsstraße nach Anspruch 9, **dadurch gekennzeichnet, dass** die mindestens eine Honmaschine (3) eine Vertikalhonmaschine (3a) ist.

11. Fertigungsstraße nach Anspruch 9 oder Anspruch 10, **dadurch gekennzeichnet, dass** diese weiterhin mindestens eine Demagnetisierungseinheit (6) zum Demagnetisieren der Lagerkomponenten umfasst.

12. Fertigungsstraße nach einem der Ansprüche 9 bis 11, **dadurch gekennzeichnet, dass** diese weiterhin mindestens eine Messeinheit (7) zur Vermessung der Lagerkomponenten umfasst.

13. Fertigungsanlage (100) umfassend mindestens zwei Fertigungsstraßen (1, 1', 1a, 1b) nach einem der Ansprüche 9 bis 12, sowie mindestens eine Bediengasse (101), wobei beiderseits einer jeden Bediengasse (101) je eine Fertigungsstraße (1a, 1b) angeordnet ist, deren Bedien- und Anzeigeeinheiten zueinander zeigend angeordnet sind.

14. Fertigungsanlage gemäß Anspruch 13, wobei die Lagerkomponenten beide Fertigungsstraßen (1a, 1b) auf der gleichen horizontalen Ebene (E) durchlaufen.

15. Fertigungsanlage gemäß Anspruch 13 oder Anspruch 14, wobei eine jede Bediengasse (101) eine Breite im Bereich von 0,75 bis 1,5 m aufweist.

16. Fertigungsanlage gemäß einem der Ansprüche 13 bis 15, wobei diese weiterhin mindestens eine Montagestation (9) umfasst, die nachfolgend zu den mindestens zwei Fertigungsstraßen (1a, 1b) mit diesen verkettet ist und zur Endmontage eines Wälz- oder Gleitlagers (40) umfassend die aus den Fertigungsstraßen (1a, 1b) stammenden Lagerkomponenten eingerichtet ist.

## Claims

1. A method for producing bearing components by means of a production line (1, 1', 1a, 1b) which comprises at least one grinding machine (2), at least one honing machine (3), at least one cleaning unit (4) and at least one transport unit (5), wherein each bearing component is transported through the production line (1) by means of the at least one transport unit (5), wherein at least one grinding operation is performed on each bearing component by means of the at least one grinding machine (2), at least one honing operation is performed on each bearing component by means of the at least one honing machine (3) and at least one clean is performed on each bearing component in the at least one cleaning unit (4), wherein a vertical grinding machine (2a) is used as the at least one grinding machine (2), wherein the bearing component is designed as a bearing ring (20, 30) and the grinding operation comprises a step of internal grinding of the bearing ring (20, 30) by means of a first vertical grinding machine (2a), and wherein each bearing component passes through the production line (1) lying on a constant horizontal plane (E), wherein an elevation shift of a centre of gravity of a bearing component by up to ± 10 cm is still considered transport in a constant horizontal plane.

2. The method according to claim 1, **characterised in that** the bearing ring (20, 30) is designed as an outer bearing ring or as an inner bearing ring.

3. The method according to claim 2, **characterised in that** the bearing ring (20, 30) is designed as an inner bearing ring and **in that** the grinding operation further comprises a step of external grinding of the inner bearing ring by means of a further vertical grinding machine (2a).

4. The method according to any one of claims 1 to 3, **characterised in that** the at least one honing machine (3) is designed as a vertical honing machine (3a).

5. The method according to any one of claims 1 to 4, **characterised in that** the production line (1, 1', 1a, 1b) is further designed to comprise at least one demagnetisation unit (6) and **in that** the bearing component is demagnetised after the grinding operation and/or the honing.

6. The method according to claim 5, **characterised in that** the bearing component is cleaned in the at least one cleaning unit (4) after the honing and/or after the demagnetisation.

7. The method according to any one of claims 1 to 6, **characterised in that** the production line (1, 1', 1a, 1b) is designed to comprise at least one measuring unit (7) and **in that** the bearing component is measured before the grinding operation and/or after the grinding operation and/or after the honing.

8. The method according to claim 2 or claim 2 in connection with any one of claims 3 to 7, **characterised in that** the bearing ring (20, 30) has a diameter ranging from 10 to 500 mm, in particular ranging from 15 to 460 mm.

9. A production line (1, 1', 1a, 1b) for producing bearing components in the form of bearing rings (20, 30), which comprises at least one grinding machine (2), at least one honing machine (3), at least one cleaning unit (4) and at least one transport unit (5), wherein the bearing components can be transported through the production line (1, 1', 1a, 1b) by means of the at least one transport unit (5) and fed to the at least one grinding machine (2), the at least one honing machine (3) and the at least one cleaning unit (4), **characterised in that**
the at least one grinding machine (2) is a vertical grinding machine (2a) and **in that** the production line (1, 1', 1a, 1b) is designed in such a way that the bearing components pass through it on a constant horizontal plane (E), wherein an elevation shift of a centre of gravity of a bearing component by up to ± 10 cm is still to be considered transport in a constant horizontal plane.

10. The production line according to claim 9, **characterised in that** the at least one honing machine (3) is a vertical honing machine (3a).

11. The production line according to claim 9 or claim 10, **characterised in that** it further comprises at least one demagnetisation unit (6) for demagnetising the bearing components.

12. The production line according to any one of claims 9 to 11, **characterised in that** it further comprises at least one measuring unit (7) for measuring the bearing components.

13. A production system (100) comprising at least two production lines (1, 1', 1a, 1b) according to any one of claims 9 to 12, as well as at least one service lane (101), wherein a production line (1a, 1b) is arranged on both sides of each service lane (101), the operating and display units of which are arranged so as to be facing one another.

14. The production system according to claim 13, wherein the bearing components pass through both production lines (1a, 1b) on the same horizontal plane (E).

15. The production system according to claim 13 or claim 14, wherein each service lane (101) has a width ranging from 0.75 to 1.5 m.

16. The production system according to any one of claims 13 to 15, wherein this further comprises at least one assembly station (9), which is subsequently linked to the at least two production lines (1a, 1b) and is set up for the final assembly of a rolling or sliding bearing (40) comprising the bearing components coming from the production lines (1a, 1b).

## Revendications

1. Procédé de fabrication de composants de palier au moyen d'une chaîne de production (1, 1', 1a, 1b) qui comprend au moins une rectifieuse (2), au moins une machine à roder (3), au moins une unité de nettoyage (4) et au moins une unité de transport (5), chaque composant de palier étant transporté à travers la chaîne de production (1) au moyen de l'au moins une unité de transport (5), au moins une rectification de chaque composant de palier étant effectuée au moyen de l'au moins une rectifieuse (2), au moins un rodage de chaque composant de palier étant effectué au moyen de l'au moins une machine de rodage (3) et au moins un nettoyage de chaque composant de palier étant effectué dans l'au moins une unité de nettoyage (4), une rectifieuse verticale (2a) étant utilisée comme au moins une rectifieuse (2), le composant de palier étant conçu comme une bague de palier (20, 30) et la rectification comprenant une étape de rectification intérieure de la bague de palier (20, 30) au moyen d'une première rectifieuse verticale (2a), et chaque composant de palier parcourant la chaîne de production (1) sur un plan horizontal constant (E), un décalage en hauteur d'un centre de gravité d'un composant de palier jusqu'à ± 10 cm étant toujours considéré comme un transport dans un plan horizontal constant.

2. Procédé selon la revendication 1, **caractérisé en ce que** la bague de palier (20, 30) est conçue comme une bague de palier extérieure ou comme une bague de palier intérieure.

3. Procédé selon la revendication 2, **caractérisé en ce que** la bague de palier (20, 30) est conçue comme une bague de palier intérieure et **en ce que** la rectification comprend en outre une étape de rectification extérieure de la bague de palier intérieure au moyen d'une autre rectifieuse verticale (2a).

4. Procédé selon l'une quelconque des revendications 1 à 3, **caractérisé en ce que** l'au moins une machine à roder (3) est conçue comme une machine à roder verticale (3a).

5. Procédé selon l'une quelconque des revendications 1 à 4, **caractérisé en ce que** la chaîne de production (1, 1', 1a, 1b) est en outre conçue pour comprendre au moins une unité de démagnétisation (6) et **en ce que** le composant de palier est démagnétisé après rectification et/ou rodage.

6. Procédé selon la revendication 5, **caractérisé en ce que** le composant de palier est nettoyé dans l'au moins une unité de nettoyage (4) après rodage et/ou après démagnétisation.

7. Procédé selon l'une quelconque des revendications 1 à 6, **caractérisé en ce que** la chaîne de production (1, 1', 1a, 1b) est conçue pour comprendre au moins une unité de mesure (7) et **en ce que** le composant de palier est mesuré avant rectification et/ou après rectification et/ou après rodage.

8. Procédé selon la revendication 2 ou la revendication 2 en lien avec l'une quelconque des revendications 3 à 7, **caractérisé en ce que** la bague de palier (20, 30) présente un diamètre dans la plage comprise entre 10 et 500 mm, en particulier dans la plage comprise entre 15 et 460 mm.

9. Chaîne de production (1, 1', 1a, 1b) pour produire des composants de palier sous forme de bagues de palier (20, 30), qui comprend au moins une rectifieuse (2), au moins une machine à roder (3), au moins une unité de nettoyage (4) et au moins une unité de transport (5), les composants de palier pouvant être transportés à travers la chaîne de production (1, 1', 1a, 1b) au moyen de l'au moins une unité de transport (5) et amenés vers l'au moins une rectifieuse (2), l'au moins une machine à roder (3) et l'au moins une unité de nettoyage (4), **caractérisée en ce que**
**en ce que** l'au moins une rectifieuse (2) est une rectifieuse verticale (2a) et **en ce que** la chaîne de production (1, 1', 1a, 1b) est conçue de manière à ce que les composants de palier la traversent sur un plan horizontal constant (E), un décalage en hauteur d'un centre de gravité d'un composant de palier jusqu'à ± 10 cm étant toujours considéré comme un transport dans un plan horizontal constant.

10. Chaîne de production selon la revendication 9, **caractérisée en ce que** l'au moins une machine à roder (3) est une machine à roder verticale (3a).

11. Chaîne de production selon la revendication 9 ou la revendication 10, **caractérisée en ce qu'**elle comprend en outre au moins une unité de démagnétisation (6) pour démagnétiser les composants de palier.

12. Chaîne de production selon l'une quelconque des revendications 9 à 11, **caractérisée en ce qu'**elle comprend en outre au moins une unité de mesure (7) pour mesurer les composants de palier.

13. Installation de production (100) comprenant au moins deux chaînes de production (1, 1', 1a, 1b) selon l'une quelconque des revendications 9 à 12, et au moins une allée de service (101), une chaîne de production (1a, 1b) étant agencée sur chaque côté de chaque allée de service (101) dont les unités de service et d'affichage sont agencées en étant orientées l'une vers l'autre.

14. Installation de production selon la revendication 13, les composants de palier traversant les deux chaînes de production (1a, 1b) sur le même plan horizontal (E).

15. Installation de production selon la revendication 13 ou la revendication 14, chaque allée de service (101) présentant une largeur dans la plage comprise entre 0,75 et 1,5 m.

16. Installation de production selon l'une quelconque des revendications 13 à 15, celle-ci comprenant en outre au moins un poste d'assemblage (9) venant en enchaînement aval avec les aux au moins deux chaînes de production (1a, 1b) et qui est conçu pour l'assemblage final d'un palier à roulement ou lisse (40) comprenant les composants de palier issus des chaînes de production (1a, 1b).
